# EUROPÄISCHE PATENTANMELDUNG

(11) **EP 4 843 370 A1**
(43) Veröffentlichungstag der Anmeldung: **25.11.2026**
(21) Anmeldenummer: 26177769.2
(22) Anmeldetag: 11.05.2026
(51) Int. Cl.: A01B 79/00, A01B 69/00

(54) **VERFAHREN ZUM EINSTELLEN EINER LANDWIRTSCHAFTLICHEN ARBEITSMASCHINE**

(30) Priorität: 22.05.2025 DE 102025119964
(71) Anmelder: CLAAS Selbstfahrende Erntemaschinen GmbH, 33428 Harsewinkel (DE)
(72) Erfinder: Thiesmann, Waldemar, 49080 Osnabrück (DE); Barther, Marvin, 33803 Steinhagen (DE); Belau, Sven Carsten, 33332 Gütersloh (DE); Bormann, Bastian, 33334 Gütersloh (DE); Hinz, Patrick, 33428 Greffen (DE); Wiegard, Justus, 59302 Oelde (DE); Ott, Florian, 78567 Fridingen a.D. (DE); Ried, Andreas, 87651 Bidingen (DE); Hund, Daniel, 88255 Baienfurt (DE); Rupp, Magnus, 73494 Rosenberg (DE); Fugunt, Michael, 88410 Bad Wurzach (DE)
(74) Vertreter: CLAAS Gruppe

(57) **Zusammenfassung**

Die vorliegende Erfindung betrifft ein Verfahren (5000) zum Einstellen einer landwirtschaftlichen Arbeitsmaschine (1000), wobei die landwirtschaftliche Arbeitsmaschine (1000) ein optisches Sensorsystem (1050, 1050') und ein Vorsatzgerät (1010) zum Bearbeiten einer landwirtschaftlichen Fläche umfasst, wobei sich in einer Fahrtrichtung hinter dem Vorsatzgerät (1010) ein Analysebereich (1075) erstreckt, das Verfahren (5000) umfassend: Erfassen zumindest eines Vorfeldbildes (2000) einer zu bearbeitenden Fläche (1065) mittels des optischen Sensorsystems (1050, 1050'), Erfassen zumindest eines Analysebildes (3000) des Analysebereichs (1075) mittels des optischen Sensorsystems (1050, 1050'), Detektieren einer Anomalie (3005), indem eine Anomaliestruktur (3010) in dem zumindest einen Analysebild (3000) segmentiert und die segmentierte Anomaliestruktur (3010) basierend auf einer aus dem Vorfeldbild (2000) bestimmten Information einer Anomalie (3005) zugeordnet wird, und Einstellen der landwirtschaftlichen Arbeitsmaschine (1000) basierend auf der Anomaliestruktur (3010), so dass die detektierte Anomalie (3005) zumindest teilweise verringert wird. Die vorliegende Erfindung betrifft ferner eine landwirtschaftliche Arbeitsmaschine (1000), die dazu eingerichtet ist, eine der hierin offenbarten Verfahren auszuführen.

## Beschreibung

Die vorliegende Erfindung betrifft ein Verfahren zum Einstellen einer landwirtschaftlichen Arbeitsmaschine. Ferner betrifft die vorliegende Erfindung eine landwirtschaftliche Arbeitsmaschine.

Aus dem Stand der Technik ist es bekannt eine landwirtschaftliche Arbeitsmaschine oder ein Vorsatzgerät der landwirtschaftlichen Arbeitsmaschine an die Umgebungsbedingungen anzupassen.

Die EP4140283A1 betrifft eine landwirtschaftliche Maschine mit einem Vorsatzgerät zum Bearbeiten einer landwirtschaftlichen Fläche und einem optischen Sensor zum Erfassen der bearbeiteten Fläche, wobei der optische Sensor als Rückfahrkamera ausgebildet und eingerichtet ist, die bearbeitete Fläche bezogen auf die Fahrtrichtung der Maschine hinter dieser zu erfassen. Die vorhandene Rückfahrkamera kann während des landwirtschaftlichen Betriebs der Maschine verwendet werden. Dabei können die Bilder der bearbeiteten Fläche hinter der Maschine ausgewertet und gegebenenfalls eine Fehlfunktion oder Fehleinstellung identifiziert werden. Beispielsweise können mittels einer Bildverarbeitungseinheit Schleifspuren des Vorsatzgeräts erkannt werden. Auf Grundlage dieser Informationen ist auch eine Höhensteuerung des Vorsatzgeräts denkbar.

Ein derartiges Einstellen der landwirtschaftlichen Arbeitsmaschine basiert jedoch lediglich auf dem bloßen Erkennen einer Schleifspur.

Eine Aufgabe der vorliegenden Erfindung ist es daher, die Verfahren derart weiterzuentwickeln, dass ein Einstellen der landwirtschaftlichen Arbeitsmaschine verbessert wird.

Diese Aufgabe wird durch die hier offenbarten Ausführungsformen gelöst, die insbesondere durch den Gegenstand der unabhängigen Ansprüche definiert sind. Die abhängigen Ansprüche betreffen weitere Ausführungsformen. Verschiedene Aspekte und Ausführungsformen dieser Aspekte sind auch in der nachstehenden Zusammenfassung und Beschreibung offenbart, die zusätzliche Merkmale und Vorteile bieten.

Ein Aspekt bezieht sich auf ein Verfahren zum Einstellen einer landwirtschaftlichen Arbeitsmaschine. Dabei kann die landwirtschaftliche Arbeitsmaschine ein optisches Sensorsystem und ein Vorsatzgerät zum Bearbeiten einer landwirtschaftlichen Fläche umfassen.

Ferner kann sich ein Analysebereich in einer Fahrtrichtung hinter dem Vorsatzgerät erstrecken. Das Verfahren kann in einem Schritt ein Erfassen zumindest eines Vorfeldbildes einer zu bearbeitenden Fläche mittels des optischen Sensorsystems umfassen. In einem weiteren Schritt kann das Verfahren ein Erfassen zumindest eines Analysebildes des Analysebereichs mittels des optischen Sensorsystems umfassen. Des Weiteren kann das Verfahren in einem weiteren Schritt ein Detektieren einer Anomalie umfassen. Die Anomalie kann detektiert werden, indem eine Anomaliestruktur in dem zumindest einen Analysebild segmentiert und die segmentierte Anomaliestruktur basierend auf einer aus dem Vorfeldbild bestimmten Information einer Anomalie zugeordnet wird. In einem weiteren Schritt kann das Verfahren ein Einstellen der landwirtschaftlichen Arbeitsmaschine basierend auf der Anomaliestruktur umfassen, so dass die detektierte Anomalie zumindest teilweise verringert wird.

Die landwirtschaftliche Arbeitsmaschine kann speziell für die Ernte von Nutzpflanzen vorgesehen sein. Bei der landwirtschaftlichen Arbeitsmaschine kann es sich beispielsweise um einen Traktor oder einen Mähdrescher handeln. Es kann sich bei der landwirtschaftlichen Arbeitsmaschine insbesondere um einen Feldhäcksler mit einem Vorsatzgerät handeln. Das Vorsatzgerät kann zum Mähen, Aufnehmen und Weiterfördern von stängelartigem Erntegut, insbesondere Mais, Miscanthus oder Sorghum, verwendet werden. Bei dem Vorsatzgerät kann es sich um ein Anbaugerät handeln, dass vorderseitig (d.h. in Fahrtrichtung vorne) an der landwirtschaftlichen Arbeitsmaschine angebracht wird. Das Vorsatzgerät kann lösbar an der landwirtschaftlichen Arbeitsmaschine angebracht werden. Das Vorsatzgerät kann verstellbare, insbesondere ungleich verstellbare und/oder unterschiedlich verstellbare, Aktoren zur Durchführung der Aufnahme des Ernteguts aufweisen. Das Vorsatzgerät kann derart ausgebildet sein, dass die Position, der Abstand und/oder die Drehzahl eines oder mehrerer Aktoren des Vorsatzgerätes erfolgen kann. Zusätzlich kann die landwirtschaftliche Arbeitsmaschine mehrere Arbeitsaggregate zum Bearbeiten und Weiterleiten des Ernteguts aufweisen. Ein solches Arbeitsaggregat kann ein Häckselwerk, eine Konditioniereinrichtung bzw. Korncracker, einen Nachbeschleuniger und/oder einen Auswurfkrümmer ausbilden.

Das optische Sensorsystem kann einen oder mehrere Sensoren umfassen. Bei dem Sensor kann es sich um ein elektronisches Bauelement handeln, das eingerichtet ist, optische Informationen (bspw. Licht bzw. reflektiertes Licht) in elektrisch auswertbare Signale umzuwandeln. Dabei kann der optische Sensor derart eingerichtet und vorgesehen sein, eine Feldumgebung, insbesondere den Bereich bzw. die landwirtschaftliche Fläche in einer Umgebung der landwirtschaftlichen Arbeitsmaschine, zu erfassen. Der (optische) Sensor kann beispielsweise auf eine vom Vorsatzgerät bearbeitete landwirtschaftliche Fläche ausgerichtet sein. Der Sensor kann dabei ein oder mehrere zeitlich aufeinanderfolgende Bilder (bzw. eine Bildserie oder ein Video) der bearbeiteten Fläche erfassen. Der Sensor kann als (Rückfahr-)kamera ausgebildet sein. Die landwirtschaftliche Fläche kann dabei Boden, Pflanzen oder geerntete Flächen umfassen. Alternativ kann, beispielsweise bei einem Traktor oder Mähdrescher, ein Spiegelersatzsystem genutzt werden. Das Spiegelersatzsystem kann neben der Spiegelfunktion eine Anomaliedetektion ermöglichen.

Bei der Anomalie kann es sich um ein Muster oder eine Spur handeln, die entsteht, wenn etwas (bspw. ein Gerät oder aufgeschobenes Erntegut) über den Boden gezogen wird und dadurch eine Spur auf dem Boden hinterlässt. Die Anomalie kann beispielsweise durch das Vorsatzgerät verursacht sein, indem das Vorsatzgerät oder ein Teil des Vorsatzgeräts während der Fahrt der landwirtschaftlichen Arbeitsmaschine den Boden berührt und dabei aufgrund der Berührung ein Muster auf der landwirtschaftlichen Fläche hinterlässt. Mit anderen Worten kann die Anomalie auftreten, wenn sich die landwirtschaftliche Arbeitsmaschine beispielsweise beim Erntevorgang kontinuierlich in eine Richtung bewegt und das Vorsatzgerät dabei kontinuierlich während des Erntevorgangs einen Kontakt mit dem Boden aufweist. Ferner kann es zu einer Erntegutstauung am Vorsatz kommen. Dabei kann die Erntegutstauung ein Aufschieben von Erntegut und Erde vor dem Vorsatzgerät verursachen. Das kann heißen, dass ein direkter Kontakt zwischen der Vorsatzgerät und dem Boden nicht stattfindet. Stattdessen wird die Anomalie möglicherweise durch das Erntegut und die Erde, die vor dem Vorsatzgerät geschoben werden, verursacht.

Das Detektieren der Anomalie kann bedeuten, dass mathematische Methoden bzw. Bildanalysemethoden zum Erkennen der Anomalie verwendet werden. Dabei kann eine Anomaliestruktur in dem Bild oder Video der vom Vorsatzgerät bearbeiteten Fläche segmentiert werden. Bei einer Segmentierung oder Segmentation kann es sich um die Erzeugung von inhaltlich zusammenhängenden Segmenten, Regionen und/oder Strukturen handeln. Beispielsweise kann eine Segmentierung mittels Zusammenfassens benachbarter Pixel oder Voxel entsprechend einem bestimmten Homogenitätskriterium durchgeführt werden. Bei der Anomaliestruktur kann es sich um eine Region bzw. Struktur im Bild handeln, die ganz oder teilweise einer Anomalie zugeordnet werden kann. Dabei kann die Anomaliestruktur von anderen Teilen des Bildes, wie unberührtem Boden oder Pflanzen, unterschieden werden. Mit anderen Worten kann die Anomaliestruktur ein Vorhandensein einer Anomalie auf einem Feld beschreiben (d.h. die Wahrscheinlichkeit, ob eine Anomalie vorliegt). Wenn ein Foto oder ein Bild von einem Feld aufgenommen wird, das möglicherweise eine Anomalie enthält, kann die Anomaliestruktur durch Bildverarbeitungstechniken erkannt werden. Dabei können Schwellwertverfahren, Kantenverfolgung, Clustering-Methoden oder maschinelles Lernen zum Einsatz kommen. Die segmentierte Anomaliestruktur kann im Bild hervorgehoben werden, bspw. durch eine farbliche Markierung oder das Ausblenden des restlichen Bildes. Es können dabei spezifische Merkmale einer Anomalie identifiziert werden, beispielsweise eine Form (meistens linienförmig oder streifenartig), Texturunterschiede (etwa glatter oder verdichteter Boden im Vergleich zu ungestörtem Boden) und/oder Farb- oder Helligkeitsunterschiede (zum Beispiel dunklere oder hellere Streifen im Bild). Durch die Analyse dieser Merkmale kann die Anomaliestruktur im Bild, die eine Anomalie zugeordnet werden kann, ermittelt und markiert werden. Ferner kann die Anomaliestruktur Informationen zu diesen Merkmalen umfassen. Mittels Segmentierens kann es sein, die Anomalie im Bild präzise zu lokalisieren und weiter zu analysieren, zum Beispiel zur Quantifizierung von Bodenverdichtungen oder zur Optimierung landwirtschaftlicher Arbeitsabläufe. Mittels Segmentation können Klassen, die Instanzen umfassen, bestimmt werden. Instanzen können andersfarbig dargestellt werden.

Mit anderen Worten kann zunächst eine abweichende Struktur der Feldfläche innerhalb mindestens eines Analysebildes identifiziert und abgegrenzt werden, um beispielsweise eine Anomalie aufzuspüren. Diese abweichende Struktur kann dann mithilfe von Informationen aus einem Vorfeldbild, welches möglicherweise als Referenz dient, als Anomalie klassifiziert. Dies kann bedeuten, dass durch die Fusion der Informationen aus dem Analysebild und dem Vorfeldbild eine Erkennung und Zuordnung der Anomalie ermöglicht wird. Das Verfahren zur Anomaliedetektion kann den Vorteil einer gesteigerten Präzision beiten, indem sie Informationen aus dem Analysebild, welches das Gebiet unmittelbar hinter dem Vorsatzgerät der Arbeitsmaschine darstellt, mit einem Vorfeldbild des Feldes direkt vor der Maschine kombiniert. Diese Bildfusion kann eine präzise Diagnose ermöglichen, da sie Veränderungen sowohl vor als auch nach der Bearbeitung betrachtet und miteinander in Beziehung setzen kann. Dies kann die Zuverlässigkeit der Erkennung von Anomalien erhöhen, da das Verfahren beide Perspektiven integriert und somit eine Datenbasis schafft. Die Fähigkeit, sich beispielsweise schnell an unterschiedliche Bedingungen und Anomalien anzupassen, kann diesen Ansatz besonders flexibel und effizient machen, indem er redundante Überprüfungen vermeidet und gezielt Veränderungen identifiziert. Das Verfahren kann zudem eine Plausibilitätsprüfung ermöglichen, indem durch den Vergleich der Zustände vor und nach der Bearbeitung des Vorsatzgeräts Diskrepanzen und Unregelmäßigkeiten sichtbar gemacht werden, die auf potenzielle Fehler oder Abweichungen hinweisen.

Das Einstellen der landwirtschaftlichen Arbeitsmaschine bzw. des Vorsatzgeräts kann bedeuten, dass eine Abhilfemaßnahme zur Beseitigung der Anomalie eingeleitet wird. Dabei kann es sich um eine Anpassung des Schnittwinkels, eine Anpassung der Querneigung, eine Anpassung des Auflagedrucks und/oder eine Anpassung der Winkel von geteilten Ernteeinrichtungen (z.B. FlexWing-Schneiwerke oder mehrteilige Mähwerke) handeln.

Die landwirtschaftliche Arbeitsmaschine kann eine Steuerungseinheit zum Einstellen der landwirtschaftlichen Arbeitsmaschine oder des Vorsatzgeräts umfassen. Die Steuerungseinheit einer landwirtschaftlichen Arbeitsmaschine kann ein zentrales System oder Gerät sein, das die verschiedenen Funktionen und Arbeitsprozesse der landwirtschaftlichen Arbeitsmaschine auswertet, berechnet, koordiniert und/oder steuert. Die Steuerungseinheit kann Signale von Sensoren und Bedienereingaben verarbeiten und kann daraufhin die Mechanik, Elektronik oder Hydraulik der landwirtschaftlichen Arbeitsmaschine regeln. Die Steuerungseinheit kann eine Recheneinheit, insbesondere eine computerbasierte Recheneinheit, eine Bildverarbeitungseinheit und/oder einen Datenspeicher, insbesondere einen computerlesbaren Datenspeicher, aufweisen.

Das Einstellen der landwirtschaftlichen Arbeitsmaschine basierend auf der Anomaliestruktur kann das Einstellen des Vorsatzgeräts umfassen. Dabei kann die Steuerungseinheit kommunizierend mit dem optischen Sensorsystem verbunden sein, wobei die Steuerungseinheit zum Segmentieren einer Anomaliestruktur basierend auf einer Bildanalyse der mittels des optischen Sensorsystems aufgenommenen Bildserie vorgesehen und eingerichtet sein kann. Die Steuerungseinheit kann ferner eine Bildverarbeitungseinheit für die Bildanalyse umfassen.

Mittels des Einstellens des Vorsatzgeräts kann die detektierte Anomalie zumindest teilweise verringert oder ganzheitlich beseitigt werden. Es kann dabei möglicherweise eingestellt werden, dass das Vorsatzgerät nach dem Einstellen keinen Kontakt mehr mit dem Boden aufweist und die Anomalie somit bei der weiteren Fahrt nicht mehr auftreten kann.

In einem weiteren Aspekt kann das Detektieren der Anomalie ein Unterteilen des zumindest einen Analysebildes in Bildsektoren mittels Teilungslinien umfassen. Dabei können die Teilungslinien im Wesentlichen parallel zu einer Fahrtrichtung der landwirtschaftlichen Arbeitsmaschine ausgerichtet sein. Ferner kann das Verfahren ein Zuordnen der Anomaliestruktur zu einem der Bildsektoren umfassen.

Die Bildsektoren können dabei Bereiche bzw. Teilbereiche des Analysebildes sein. Die Bildsektoren können dabei unterschiedliche oder gleiche Größen aufweisen. Mit anderen Worten kann das Analysebild mittels der Teilungslinien geteilt bzw. getrennt werden, so dass verschiedene Bildsektoren entstehen. Die Teilungslinien können dabei so angeordnet sein, dass sie parallel zueinander verlaufen. Vorteilhafterweise können die Teilungslinien dabei der Richtung der Anomalie (bspw. einer Schleifspur) ausgerichtet sein, wobei sich die Anomalie üblicherweise entlang einer Fahrtrichtung der landwirtschaftlichen Arbeitsmaschine erstreckt. Im Ergebnis können sich nach dem Unterteilen eine Vielzahl von Bildsektoren ergeben, wobei das Analysebild beispielsweise eine quadratische Form und die Bildsektoren jeweils eine rechteckige Form aufweisen können. Da die Anomaliestruktur ebenfalls eine rechteckige Form aufweisen kann, kann besonders schnell und effizient ermittelt werden, wenn sich die Anomaliestruktur und einer der Bildsektoren ganz oder größtenteils überschneiden.

Das Zuordnen der Anomaliestruktur kann umfassen, dass mittels einer mathematischen Methode bestimmt wird, ob sich ein Teil (bspw. ein Flächenabschnitt) der Anomaliestruktur in einem der Bildsektoren befindet. Beispielsweise kann die Anomaliestruktur demjenigen Bildsektor zugeordnet werden, in dem sich ein bestimmter Prozentsatz (bspw. 70 %) der Fläche der Anomaliestruktur befindet.

Die Bildsektoren können dabei helfen die Position der Anomalie zu finden. Ferner kann mittels des Wissens über die Position der Anomalie das Vorsatzgerät besser eingestellt werden. Ein Vorteil des Zuordnens zu einem Bildsektor kann es sein, dass ein verbessertes Detektieren erreicht werden kann, weil die Position der Anomalie mittels der Bildsektoren bestimmt werden kann. Ferner kann die landwirtschaftliche Arbeitsmaschine mittels der Position besser eingestellt werden. Beispielsweise kann das Vorsatzgerät basierend auf der Position der Anomalie eingestellt werden, indem der Teil des Vorsatzgeräts, der die Anomalie verursacht angehoben wird.

In einem weiteren Aspekt kann die Anomaliestruktur einem Bildsektor zugeordnet werden, wenn sich die Anomaliestruktur zumindest teilweise für eine vordefinierte Zeit in dem Bildsektor befindet.

Beispielsweise kann die Anomaliestruktur demjenigen Bildsektor zugeordnet werden, in dem sich ein bestimmter Prozentsatz der Fläche der Anomaliestruktur für eine vordefinierte Zeit (bspw. wenige Sekunden) befindet. Ein Vorteil eines derartigen Zuordnens basierend auf der vordefinierten Zeit kann es sein, dass das Detektieren besonders schnell erfolgen kann.

In einem weiteren Aspekt kann die segmentierte Anomaliestruktur basierend auf einer aus dem Vorfeldbild bestimmten Information einer Anomalie zugeordnet werden, indem pixelbasierte Ähnlichkeiten zwischen der segmentierten Anomaliestruktur und dem Vorfeldbild mittels Bildvergleichsalgorithmus identifiziert und quantifiziert werden, ein zeitlicher Differenzwert bestimmt wird, wobei der zeitliche Differenzwert die zeitliche Verschiebung zwischen der segmentierten Anomaliestruktur und dem Vorfeldbild quantifiziert und die Anomalie basierend auf den pixelbasierten Ähnlichkeiten und dem zeitlichen Differenzwert ermittelt wird.

In einem weiteren Aspekt kann das Verfahren in einem Schritt ein Ermitteln der Position der detektierten Anomalie umfassen. In einem weiteren Schritt kann das Verfahren ein Bestimmen, ob die Position der detektierten Anomalie innerhalb einer durch das Vorsatzgerät bearbeiteten landwirtschaftlichen Fläche liegt, umfassen.

Das Vorsatzgerät kann eine Vorsatzbreite aufweisen. Mit anderen Worten kann die Vorsatzbreite eine in einer Richtung orthogonal zur Fahrtrichtung der landwirtschaftlichen Arbeitsmaschine gemessene Distanz sein. Es ist möglich, dass die Anomalie außerhalb der Vorsatzbreite liegt. Liegt die Anomalie außerhalb der Vorsatzbreite, wird die Anomalie möglicherweise nicht durch das Vorsatzgerät verursacht. Liegt die Position der detektierten Anomalie innerhalb einer durch das Vorsatzgerät bearbeiteten landwirtschaftlichen Fläche, kann davon ausgegangen werden, dass die Anomalie durch das Vorsatzgerät verursacht wird.

In einem weiteren Aspekt kann das Verfahren in einem Schritt ein Übermitteln einer Information über die detektierte Anomalie an einen Bediener der landwirtschaftlichen Arbeitsmaschine.

Beispielsweise kann die Information über die detektierte Anomalie in Form eines Signaltons (d.h. ein akustisches Signal) oder einer Warnmeldung ausgegeben werden. Es ist auch möglich, dass die detektierte Anomalie auf einer Ausgabeeinheit dargestellt wird. Beispielsweise kann eine Information in Form einer Aufnahme der Anomalie aus Birdview-Ansicht oder aus Perspektive des Fahrers dargestellt werden. Dadurch kann dem Bediener der landwirtschaftlichen Arbeitsmaschine mitgeteilt werden, dass eine Anomalie vorliegt und somit Handlungsbedarf besteht. Basierend auf der Information kann auch eine Weisung bzw. Aufforderung (auch Abhilfemaßnahme genannt) an den Bediener ausgegeben werden. Es ist auch möglich, dass nach dem Übermitteln der Information automatisch mittels Aktoren eine Abhilfemaßnahme in die Wege geleitet wird. Mit anderen Worten kann mittels des Verfahrens eine Handlungsempfehlung ausgegeben oder aktorisch in den Ernteprozess eingegriffen werden. Auch eine Kombination von aktorischen und manuellen Handlungen ist möglich.

In einem weiteren Aspekt kann das Verfahren in einem Schritt ein Erfassen einer Vielzahl von Bildern des Analysebereichs mittels des optischen Sensorsystems umfassen. In einem weiteren Schritt kann das Verfahren die Anomalie des Vorsatzgeräts detektieren, indem Anomaliestrukturen in der Vielzahl von Analysebildern segmentiert werden, ein Qualität-Score basierend auf den segmentierten Anomaliestrukturen ermittelt wird und der Qualität-Score einen vordefinierten Schwellwert erreicht.

Der Qualitäts-Score kann die Sicherheit angeben, mit der die gefundene Instanz (bspw. eine Anomaliestruktur) tatsächlich vorliegt. So kann eine Vorbeugung von Falsch-Positiven Instanzen möglich sein. Tritt beispielsweise in einem Analysebild eine Anomalie auf, so wird bei einer beispielhaften Bildfrequenz von 20 bis 30 Bildern pro Sekunde diese Anomalie im nächsten Analysebild möglicherweise nicht verschwunden sein. Vor der Ausgabe der CAN Botschaften, welche z.B. sekündlich ausgegeben werden können, oder in einem Intervall, welches länger als die Bildfrequenz des optischen Sensorsystems ist, können die Prädiktionen mehrerer Bilder betrachtet werden. Ist dieselbe Instanz beispielsweise auf mehreren Bildern zu sehen, so wird ein prozentualer Score berechnet, welcher sich aus der prozentualen Anzahl der Bilder mit derselben Instanz ergibt. Liegt der Score oberhalb eines Schwellwertes, beispielsweise 80%, so kann eine Handlung des nachfolgenden Automaten erlaubt werden. Optional ist auch eine Empfindlichkeit des Systems denkbar, welche den Schwellwert des Qualitäts-Scores durch den Bediener wählbar macht. Der vordefinierte Schwellwert (bspw. Schleifspurintensität, d.h. Breite, Länge, Anzahl der Schleifspur/en) kann vom Fahrerverhalten gelernt werden. Hebt der Fahrer den Vorsatz beispielsweise manuell bei einer Anomalie unterhalb eines bestimmten Qualität-Scores an, so kann der Qualität-Score zukünftig reduziert werden.

Mittels der Detektion der Anomalie lassen sich auch die Klassen Schleifspur, Erntegut liegend und/oder Stoppelfeld bestimmen. Vorteilhafterweise kann durch die weiteren Klassen besser abgegrenzt werden, ob eine Anomalie vorliegt. Der Bildbereich, welcher das Stoppelfeld zeigt, kann mittels Kantendetektion bearbeitet werden. Hierbei können gängige Verfahren wie Canny-Operatoren, Sobel-Operatoren oder andere Verfahren zur Kantendetektion eingesetzt werden. Längere, zusammenhängende Kanten in vertikaler Richtung können anschließend als Stoppelfeld betrachtet werden, kürzere und horizontale Kanten können vernachlässigt werden. Die Anomalie (d.h. Position und Größe) und die weiteren Klassen können ferner in einer Karte gespeichert werden und an nachfolgende Arbeitsprozesse (z.B. Stoppelbearbeitung) übertragen werden, um diese zu optimieren.

In einem weiteren Aspekt kann das Verfahren in einem Schritt ein Einstellen der landwirtschaftlichen Arbeitsmaschine umfassen, indem eine Arbeitshöhe, eine Auslenkung um eine Kippachse und/oder eine Auslenkung um eine Schwenkachse des Vorsatzgerätes verändert wird.

Ein weiterer Aspekt bezieht sich auf eine landwirtschaftliche Arbeitsmaschine mit einem Vorsatzgerät zum Bearbeiten einer landwirtschaftlichen Fläche und ein optisches Sensorsystem. Dabei kann das optische Sensorsystem eingerichtet sein, zumindest ein Vorfeldbild einer bearbeiteten Fläche und zumindest ein Analysebild eines Analysebereichs zu erfassen, wobei sich der Analysebereich in einer Fahrtrichtung hinter dem Vorsatzgerät erstreckt. Dabei kann die landwirtschaftliche Arbeitsmaschine eine Steuerungseinheit aufweisen, wobei die Steuerungseinheit eingerichtet ist, eine Anomalie des Vorsatzgeräts zu detektieren, indem eine Anomaliestruktur in dem zumindest einen Analysebild segmentiert und die segmentierte Anomaliestruktur basierend auf einer aus dem Vorfeldbild bestimmten Information einer Anomalie zugeordnet wird. Die Steuerungseinheit kann eingerichtet sein, die landwirtschaftliche Arbeitsmaschine basierend auf der Anomaliestruktur einzustellen, so dass die detektierte Anomalie zumindest teilweise verringert wird.

Mit anderen Worten kann die landwirtschaftliche Arbeitsmaschine eingerichtet sein, eine der hierin offenbarten Verfahren auszuführen. Dafür kann die landwirtschaftliche Arbeitsmaschine beispielsweise weitere elektronische Komponenten aufweisen, die ein hierin beschriebenes computer-implementiertes Verfahren durchführen.

In einem weiteren Aspekt kann das optische Sensorsystem an einem in Fahrtrichtung vorderen Teil der landwirtschaftlichen Arbeitsmaschine angeordnet sein. Dabei kann das optische Sensorsystem einen ersten Sensor, der auf den Analysebereich ausgerichtet ist, und einen zweiten Sensor, der auf die zu bearbeitende Fläche ausgerichtet ist, aufweisen.

In einem weiteren Aspekt kann die landwirtschaftliche Arbeitsmaschine eine Ausgabeeinheit aufweisen. Dabei kann die Steuerungseinheit eingerichtet sein, Information über die detektierte Anomalie an die Ausgabeeinheit zu übermitteln.

In einem weiteren Aspekt kann die Steuerungseinheit eingerichtet sein, eine Arbeitshöhe, eine Auslenkung um eine Kippachse und/oder eine Auslenkung um eine Schwenkachse des Vorsatzgerätes zu verändern.

Beispielsweise kann die Steuerungseinheit eingerichtet sein, Befehle auszugeben, die Arbeitshöhe des Vorsatzgeräts zu korrigieren. Weiter beispielsweise kann die Steuerungseinheit eingerichtet sein, bei Detektieren bzw. Erkennen der Anomalie die Arbeitshöhe des Vorsatzgeräts vorübergehend zu erhöhen. Das kann heißen, dass die Arbeitshöhe des Vorsatzgeräts erhöht wird, wenn die Anomaliestruktur in zumindest einem Analysebild ermittelt wurde.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Für den Fachmann ist ersichtlich, dass die vorgestellten Verfahren in Form von Anweisungen in Software oder auf einem Computerprogrammprodukt implementiert oder gespeichert sein können, wobei gespeicherte Anweisungen es ermöglichen, die Schritte nach dem Verfahren auszuführen, wenn eine entsprechende datenverarbeitende Maschine durch die Software gesteuert wird. Mit anderen Worten ist es möglich, dass es sich bei den Verfahren um computer-implementierte Verfahren handelt. Ausführungsformen beziehen sich daher auch auf ein Speichermedium mit darauf gespeicherter Software, die ausgebildet ist, um die vorgestellten Verfahren durchzuführen, wenn die Software auf einer datenverarbeitenden Einrichtung ausgeführt wird.

Weitere Vorteile und Merkmale ergeben sich aus den folgenden Ausführungsformen, die sich zum Teil auf die Figuren beziehen. Die Figuren zeigen die Ausführungsformen nicht immer maßstabsgetreu. Die Abmessungen der verschiedenen Merkmale können insbesondere zur Klarheit der Beschreibung entsprechend vergrößert oder verkleinert sein. Hierzu sind die Figuren zumindest teilweise schematisiert.

Es zeigt:
- Fig. 1: eine schematische Darstellung einer landwirtschaftlichen Maschine in einer Seitenansicht gemäß einer Ausführungsform;
- Fig. 2: eine schematische Darstellung eines Vorfeldbildes, das die zu bearbeitenden Fläche aus Sicht eines optischen Sensors der landwirtschaftlichen Arbeitsmaschine abbildet, gemäß einer Ausführungsform;
- Fig. 3: eine schematische Darstellung eines Analysebild, das den Analysebereich aus Sicht eines optischen Sensors der landwirtschaftlichen Arbeitsmaschine abbildet, gemäß einer Ausführungsform;
- Fig. 4: eine schematische Darstellung des Analysebildes mit Teilungslinien und Bildsektoren und; und
- Fig. 5: eine schematische Darstellung eines Verfahrens zum Einstellen einer landwirtschaftlichen Arbeitsmaschine gemäß einer Ausführungsform.

In der folgenden Beschreibung wird auf die beigefügten Figuren verwiesen, die Teil der Offenbarung sind und bestimmte Aspekte und Ausführungsformen veranschaulichen, unter denen die vorliegende Offenbarung verstanden werden kann. Gleiche Bezugszeichen beziehen sich auf gleiche oder zumindest funktionell oder strukturell ähnliche Merkmale. Im Allgemeinen gilt eine Offenbarung eines beschriebenen Verfahrens auch für eine entsprechende Vorrichtung zur Durchführung des Verfahrens oder ein entsprechendes System, das ein oder mehrere Vorrichtungen umfasst, und umgekehrt. Wird beispielsweise ein bestimmter Verfahrensschritt beschrieben, so kann eine entsprechende Vorrichtung ein Merkmal zur Durchführung des beschriebenen Verfahrensschrittes enthalten, auch wenn dieses Merkmal in der Abbildung nicht ausdrücklich beschrieben oder dargestellt ist. Wird dagegen beispielsweise ein bestimmtes Gerät auf der Grundlage von Funktionseinheiten beschrieben, kann ein entsprechendes Verfahren einen oder mehrere Schritte zur Durchführung der beschriebenen Funktionalität enthalten, auch wenn diese Schritte in den Abbildungen nicht explizit beschrieben oder dargestellt sind. Ähnlicherweise kann ein System entsprechende Vorrichtungsmerkmal oder Merkmale zur Durchführung eines bestimmten Verfahrensschritts umfassen. Die Merkmale der verschiedenen oben oder unten beschriebenen beispielhaften Aspekte und Ausführungsformen können kombiniert werden, sofern nicht ausdrücklich etwas anderes angegeben ist.

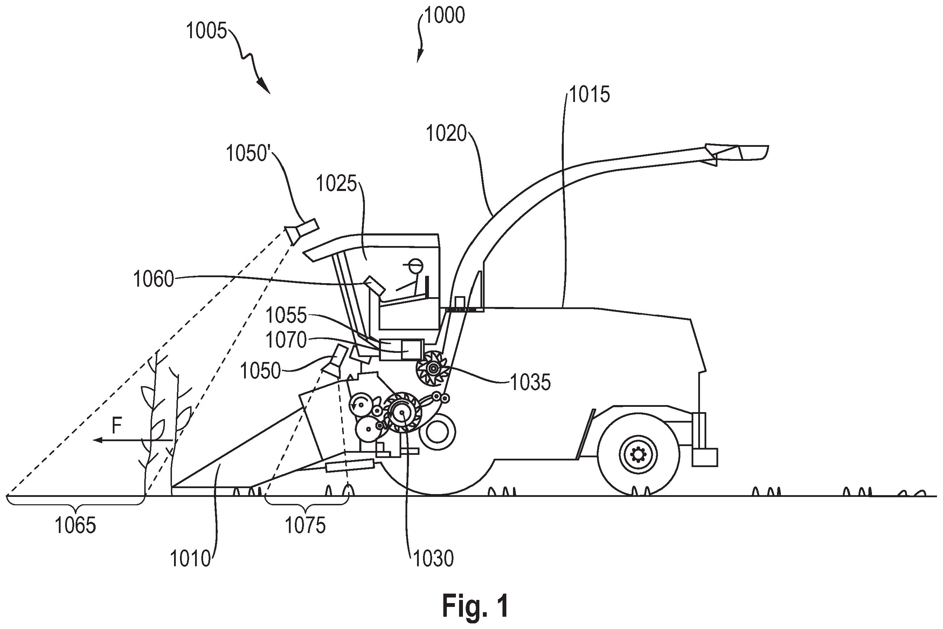

Fig. 1 zeigt in einer Seitenansicht einen Feldhäcksler 1005 als bevorzugtes Beispiel einer landwirtschaftlichen Arbeitsmaschine 1000. Der Feldhäcksler 1005 dient zur Aufnahme, Zerkleinerung und Verladung von Erntegut wie Gras, Luzerne oder Mais, insbesondere bei der Bereitung von Silage bzw. Ganzpflanzensilage. Daneben erlangt der Feldhäcksler 1005 in letzter Zeit wachsende Bedeutung bei der Ernte nachwachsender Rohstoffe. Ein weiteres Einsatzgebiet ist das Häckseln von Stroh.

Der Feldhäcksler 1005 hat eine starre Karosserie 1015, an der ein Vorsatzgerät 1010, typischerweise ein Maisgebiss, höhenverstellbar und ein Auswurfkrümmer 1020 um eine vertikale Achse schwenkbar angebracht sind. Innerhalb der Karosserie 1015, unterhalb einer Fahrerkabine 1025, sind ein Häckselwerk 1030 und ein Nachbeschleuniger 1035 untergebracht. In an sich bekannter Weise dient ersteres zum Zerkleinern des vom Vorsatzgerät 1010 zugeführten Ernteguts und letzterer zum Beschleunigen des so erhaltenen Häckselguts auf eine zum Durch laufen des Auswurfkrümmers 1020 erforderliche Geschwindigkeit. Das Vorsatzgerät 1010 kann mehrere jeweils von Halmteilern flankierte Rotoren aufweisen. Der Auswurfkrümmer 1020 ist in einer nach hinten, entgegen der normalen Fahrtrichtung F ausgestreckten Orientierung ausgerichtet.

Ein Analysebereich 1075 erstreckt sich in der Fahrtrichtung F hinter dem Vorsatzgerät 1010, d.h. beispielsweise zwischen Vorsatzgerät 1010 und weiteren Bestandteilen der landwirtschaftlichen Arbeitsmaschine 1000. Die landwirtschaftliche Arbeitsmaschine 1000 weist ein optisches Sensorsystem 1050, 1050' auf, wobei das optische Sensorsystem 1050, 1050' eingerichtet ist, zumindest ein Vorfeldbild der bearbeiteten Fläche 1065 und zumindest ein Analysebild des Analysebereichs 1075 zu erfassen. Dafür ist das optische Sensorsystem 1050, 1050' an einem in Fahrtrichtung F vorderen Teil der landwirtschaftlichen Arbeitsmaschine 1000 angeordnet. Ferner umfasst das optische Sensorsystem 1050, 1050' einen ersten Sensor, der auf den Analysebereich 1075 ausgerichtet ist, und einen zweiten Sensor, der auf die zu bearbeitende Fläche 1065 ausgerichtet ist.

Die landwirtschaftliche Arbeitsmaschine 1000 weist ferner eine Steuerungseinheit 1055 auf, wobei die Steuerungseinheit 1055 eingerichtet ist, eine Anomalie des Vorsatzgeräts 1010 zu detektieren. Die Anomalie wird detektiert, indem eine Anomaliestruktur in dem zumindest einen Analysebild segmentiert und die segmentierte Anomaliestruktur basierend auf einer aus dem Vorfeldbild bestimmten Information einer Anomalie zugeordnet wird. Die Steuerungseinheit 1055 ist ferner eingerichtet, die landwirtschaftliche Arbeitsmaschine 1000 basierend auf der Anomaliestruktur einzustellen, so dass die detektierte Anomalie zumindest teilweise verringert wird.

Bei der Anomalie handelt es sich beispielsweise um eine Schleifspur bzw. Spur, die beispielsweise durch das Vorsatzgerät 1010 verursacht sein kann, indem das Vorsatzgerät 1010 oder ein Teil des Vorsatzgeräts 1010 (bspw. Halmteiler oder Rotoren) während der Fahrt der landwirtschaftlichen Arbeitsmaschine 1000 den Boden berührt und dabei aufgrund der Berührung eine Spur hinterlässt.

Die landwirtschaftliche Arbeitsmaschine 1000 weist eine Ausgabeeinheit 1060 auf und die Steuerungseinheit 1055 eingerichtet ist, Information über die detektierte Anomalie an die Ausgabeeinheit 1060 zu übermitteln. Da die Steuerungseinheit 1055 jeweils das gesamte Bild des optischen Sensors 1050 empfängt, ist eine Bildverarbeitungseinheit 1070 der Steuerungseinheit 1055 jederzeit in der Lage, den Teil des Bildes auszuwerten, in dem die zu bearbeitende Fläche 1065 vor dem Feldhäcksler 1005 dargestellt ist.

Wenn die Bildverarbeitungseinheit 1070 eine Anomalie erkennt, gibt sie ein Fehlersignal an die Steuerungseinheit 1055 weiter, und diese löst daraufhin eine Abhilfemaßnahme aus. Der obere und untere Grenzwert für das Vorsatzgerät 1010 (oder für das Fehlersignal) sowie die bei einer detektierten Anomalie zu treffende Abhilfemaßnahme können vom Bediener festlegbar sein.

Dem Bediener der landwirtschaftlichen Arbeitsmaschine 1000 kann einer Information über die detektierte Anomalie 3005 übermittelt werden. Im Falle einer Unter- bzw. Überschreitung eines Grenzwerts kann die Abhilfemaßnahme darin bestehen, dass die Steuerungseinheit 1055 die Höhe des Vorsatzgeräts 1010 über dem Boden mit Hilfe eines Stellglieds korrigiert, bis die Grenzwerte wieder eingehalten sind. Eine solche Korrektur kann vollautomatisch, ohne Beteiligung des Bedieners, vorgenommen werden. Alternativ kann das Vorliegen des Fehlersignals dazu führen, dass die Bilder des optischen Sensors 1050, 1050' auf der Ausgabeeinheit 1060 durchgeschaltet werden, ggf. zusammen mit einem Hinweis auf die Richtung einer von der Steuerungseinheit 1055 beabsichtigten Höhenkorrektur, und diese erst nach Genehmigung durch den Bediener vorgenommen wird.

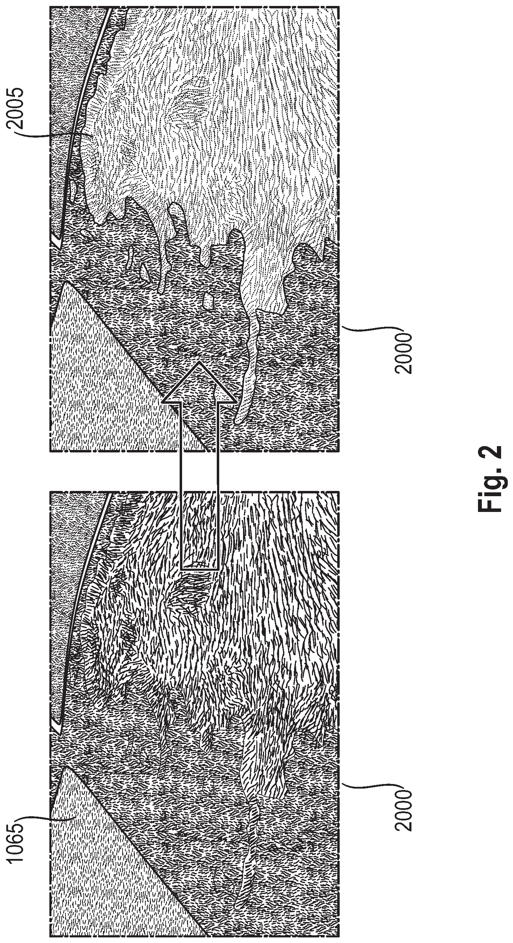

Fig. 2 zeigt eine schematische Darstellung eines Vorfeldbildes 2000, das die zu bearbeitenden Fläche 1065 aus Sicht eines optischen Sensors 1050' der landwirtschaftlichen Arbeitsmaschine 1000 abbildet, gemäß einer Ausführungsform.

Das Vorfeldbild 2000 ist eine visuelle Darstellung jener Fläche, die vor der Bearbeitung durch eine landwirtschaftliche Arbeitsmaschine 1000 liegt. Es wird von einem optischen Sensor 1050' aufgenommen, der an der Arbeitsmaschine 1000 angebracht ist, um genaue und detaillierte Informationen über die zu bearbeitende Fläche 1065 zu erfassen.

Der optische Sensor 1050' ist so konzipiert, dass er eine breite Palette von Licht- und Farbvariationen erfasst, um ein möglichst klares und differenziertes Bild zu liefern. Dadurch können wichtige Merkmale wie Lagergetreide, Unregelmäßigkeiten, Feuchtigkeit, Bewuchs und Hindernisse innerhalb der Fläche erkannt und beurteilt werden. Das Vorfeldbild 2000 bietet folglich eine grundlegende Informationsbasis zur Bewertung des Bodenzustands, des vorhandenen Bewuchses und anderer relevanter Umweltfaktoren. Diese Informationen sind essenziell für die Anpassung der Arbeitsmaschine 1000 und ihrer Vorgehensweise, um eine optimale Bearbeitung der Fläche 1065 zu gewährleisten.

Des Weiteren wurde eine Fläche 2005, auf der sich Lagergetreide befindet, segmentiert. Bei der segmentierten Fläche 2005 handelt es sich um eine aus dem Vorfeldbild 2000 bestimmte Information, die für weitere Verfahrensschritte genutzt werden kann.

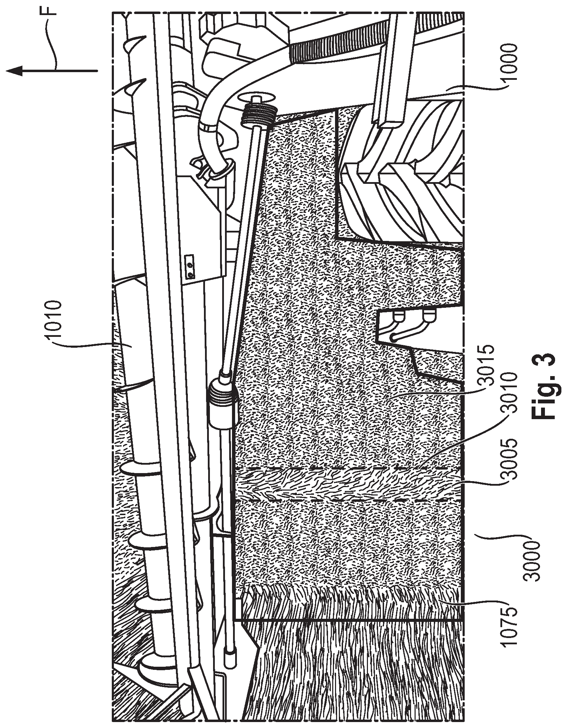

Fig. 3 zeigt eine schematische Darstellung eines Analysebild 3000, das den Analysebereich 1075 aus Sicht eines optischen Sensors 1050 der landwirtschaftlichen Arbeitsmaschine 1000 abbildet, gemäß einer Ausführungsform.

Der Analysebereich 1075 ist hier ein definierter Abschnitt, der sich in der Fahrtrichtung F direkt hinter dem Vorsatzgerät 1010 der landwirtschaftlichen Arbeitsmaschine 1000 erstreckt. Der Analysebereich 1075 liegt zwischen dem Vorsatzgerät 1010 und den übrigen Komponenten der Maschine 1000. Der Analysebereich 1075 dient der Überprüfung und Bewertung des Bearbeitungsergebnisses, das durch das Vorsatzgerät 1010 generiert wurde. Da der Analysebereich 1075 sich unmittelbar an das Vorsatzgerät 1010 anschließt, ermöglicht er eine zeitnahe, präzise Analyse der Auswirkungen der maschinellen Bearbeitung auf die landwirtschaftliche Fläche. Dies kann besonders wichtig sein, da dadurch Änderungen oder Auffälligkeiten direkt erfasst und gegebenenfalls schnelle Anpassungen vorgenommen werden können, um die Effizienz der Bearbeitungsprozesse zu maximieren und die Qualität der Arbeit zu sichern.

Im Analysebild 3000 wurde ein Anomaliestruktur 3010 segmentiert. Neben der Anomaliestruktur 3010 kann eine Hintergrundstruktur 3015 ermittelt werden. Die Anomaliestruktur 3010 und die Hintergrundstruktur 3015 können eine Segmentierungsmaske bilden.

Die segmentierte Anomaliestruktur 3010 kann über eine zusammenhängende Pixelfläche beispielsweise mittels der Bildverarbeitungseinheit 1070 segmentiert werden. Instanzen weiterer Klassen können andersfarbig dargestellt werden. Die segmentierte Anomaliestruktur 3010 und die weiteren Instanzen sind eindeutig voneinander unterscheidbar. Die in Fig. 1 dargestellte Aufnahme zeigt einen möglichen Blickwinkel, alternativ sind jedoch auch vergleichbare Anbaupositionen denkbar, welche den Analysebereich 3000 darstellen. Die segmentierte Anomaliestruktur 3010 kann für die Bildverarbeitungseinheit 1070 beispielsweise an ihrer gleichmäßig langgestreckten Struktur zu erkennen sein und kann nach der Erkennung einer Anomalie 3005 zugeordnet werden. Grund für die Anomalie 3005 kann ein einzelner Erdbrocken sein, an den das Vorsatzgerät 1010 angestoßen ist und der in der Folge vom Vorsatzgerät 1010 über die Bodenoberfläche ausgeschmiert wird. Wenn eine solche Anomalie 3005 erkannt wird, kann die Steuerungseinheit 1055 sie beenden, indem das Vorsatzgerät 1010 kurz mit Hilfe eines Stellglieds angehoben wird, bis die Reste des Erdklumpens hinter ihm liegen, und dann wieder abgesenkt wird.

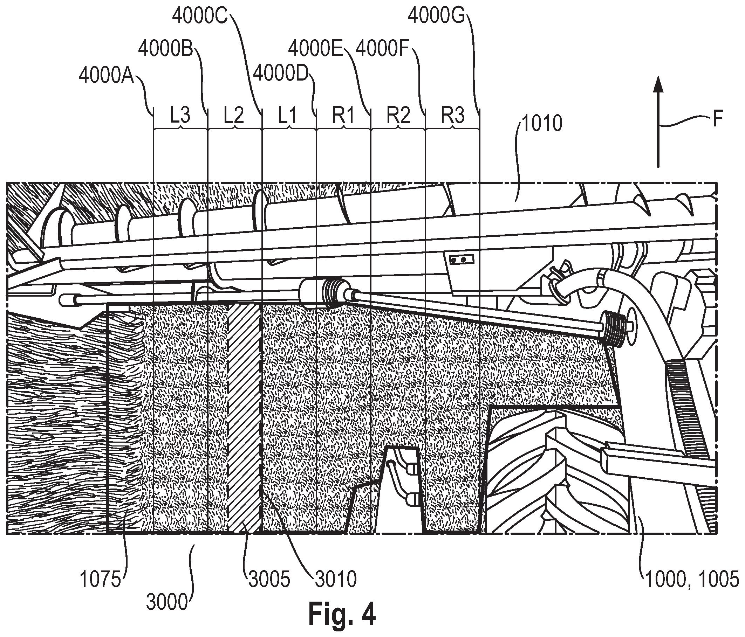

Fig. 4 zeigt das Analysebild 3000 mit Teilungslinien 4000A-G und Bildsektoren L1-L3 und R1-R3.

Die Teilungslinien 4000A-G können im Wesentlichen parallel zur Fahrtrichtung F der landwirtschaftlichen Arbeitsmaschine 1000 ausgerichtet sein. Ferner kann das Verfahren ein Zuordnen der Anomaliestruktur 3010 zu einem der Bildsektoren L1-L3 oder R1-R3 umfassen. Im vorliegenden Fall kann die Anomaliestruktur 3010 dem Bildsektor L2 zugewiesen werden.

Das hierin beschriebene Verfahren sieht optional eine Einteilung des Analysebereichs 1075 in acht Bildsektoren L1-L3 und R1-R3 vor, jeweils vier Bildsektoren rechts und links vom Maschinenmittelpunkt. Dabei wäre auch eine andere Anzahl von Bildsektoren denkbar, ebenso wie eine Einführung von horizontalen Bildsektoren. Trifft eine Anomaliestruktur 3010 beispielsweise im Sektor R1 auf, so wird dies über CAN Botschaft ausgegeben, ebenso wie die Breite, die Länge und die Fläche der Anomaliestruktur 3010. Die Länge und die Breite werden dabei jeweils über die das Polygon einschließende Bounding-box ermittelt. Befindet sich ein Polygon in mehreren Bildsektoren, so wird es in der CAN Botschaft in mehreren Bildsektoren ausgewiesen.

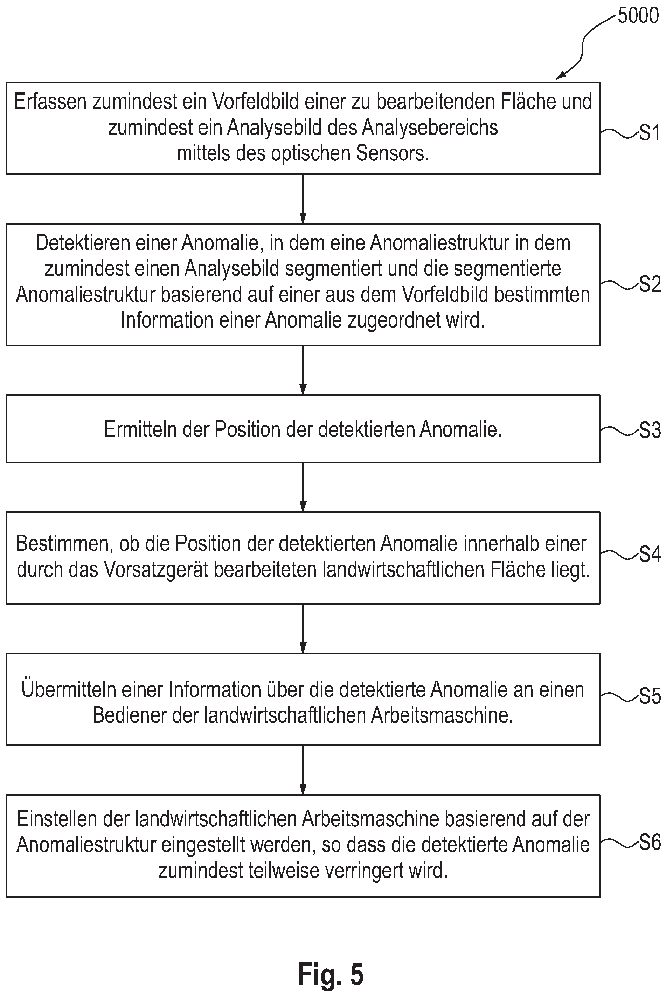

Fig. 5 zeigt eine schematische Darstellung eines Verfahrens 5000 zum Einstellen einer landwirtschaftlichen Arbeitsmaschine 1000 gemäß einer Ausführungsform.

In einem Schritt S1 des Verfahrens kann zumindest ein Vorfeldbild 2000 einer zu bearbeitenden Fläche 1065 mittels des optischen Sensorsystems 1050, 1050' erfasst werden. Gleichzeitig kann zumindest ein Analysebild 3000 des Analysebereichs 1075 mittels des optischen Sensorsystems 1050, 1050' erfasst werden. Es ist dabei auch möglich, dass eine Vielzahl von Bildern 3000, 2000 in Form eines Videos mittels des optischen Sensorsystems 1050, 1050' erfasst wird.

In einem weiteren Schritt S2 kann eine Anomalie 3005 detektiert werden, indem eine Anomaliestruktur 3010 in dem zumindest einen Analysebild 3000 segmentiert und die segmentierte Anomaliestruktur 3010 basierend auf einer aus dem Vorfeldbild 2000 bestimmten Information einer Anomalie zugeordnet wird. Hierbei wird semantische Bildsegmentierung mittels CNN (Convolutional Neural Networks) durchgeführt, wobei z.B. eine UNET Architektur mit einem Feature Extractor bzw. Backbone bestehend aus z.B. der mobileNet Architektur denkbar wären. Alternativ sind auch vergleichbare Architekturen denkbar, sowie klassische Verfahren zur Segmentierung von Bildern. Ein CNN (auch "Modell" genannt) ermöglicht die Segmentierung der Klassen "Hintergrund" und "Anomalie". Alternativ sind auch weitere Klassen oder eine Untermenge der oben genannten Klassen denkbar.

Dabei kann die Anomalie 3005 des Vorsatzgeräts 1010 detektiert werden, indem Anomaliestrukturen 3010 in der Vielzahl von Bildern 2000, 3000 segmentiert werden. Daraufhin kann ein Qualität-Score basierend auf den segmentierten Anomaliestrukturen 3010 ermittelt werden. Sobald der Qualität-Score einen vordefinierten Schwellwert erreicht, kann davon ausgegangen werden, dass die Anomalie 3005 tatsächlich vorliegt. Der Qualitäts-Score gibt dabei beispielsweise die Sicherheit an, mit der die detektierte Anomalie 3005 tatsächlich vorliegt. So kann möglicherweise eine Vorbeugung von Falsch-Positiven Instanzen möglich sein.

Das Detektieren der Anomalie 3005 kann umfassen, dass das Analysebild 3005 in Bildsektoren mittels Teilungslinien unterteilt wird. Die Teilungslinien können im Wesentlichen parallel zu einer Fahrtrichtung F der landwirtschaftlichen Arbeitsmaschine 1000 ausgerichtet sein. Ferner kann die Anomaliestruktur 3010 einem der Bildsektoren zugeordnet werden.

In einem weiteren optionalen Schritt S3 kann die Position der detektierten Anomalie 3005 ermittelt werden.

In einem weiteren optionalen Schritt S4 kann bestimmt werden, ob die Position der detektierten Anomalie 3005 innerhalb einer durch das Vorsatzgerät 1010 bearbeiteten landwirtschaftlichen Fläche 1065 liegt.

In einem weiteren optionalen Schritt S5 kann eine Information über die detektierte Anomalie 3005 an einen Bediener der landwirtschaftlichen Arbeitsmaschine 1000 übermittelt werden.

In einem weiteren Schritt S6 kann die landwirtschaftliche Arbeitsmaschine 1000 basierend auf der Anomaliestruktur 3010 eingestellt werden, so dass die detektierte Anomalie 3005 zumindest teilweise verringert wird. Dies geschieht beispielsweise durch die Anpassung spezifischer Parameter der Maschine 1000, wobei Veränderungen in der Arbeitshöhe und mechanischen Bewegungen des Vorsatzgerätes 1010 vorgenommen werden. Dazu gehört möglicherweise die Auslenkung um eine Kippachse, um den vertikalen Winkel der Bearbeitung zu modifizieren, sowie die Auslenkung um eine Schwenkachse, um den horizontalen Arbeitsbereich zu optimieren. Diese präzisen Einstellungen ermöglichen es der Maschine 1000, auf die identifizierte Anomalie 3005 zu reagieren und die Bearbeitungsprozesse anzupassen, wodurch eine Verbesserung der Arbeitsgenauigkeit und Effizienz ermöglicht wird.

### Bezugszeichenliste

- 1000: landwirtschaftliche Arbeitsmaschine
- 1005: Feldhäcksler
- 1010: Vorsatzgerät
- 1015: Karosserie
- 1020: Auswurfkrümmer
- 1025: Fahrerkabine
- 1030: Häckselwerk
- 1035: Nachbeschleuniger
- 1040: Ladefläche
- 1045: Begleitfahrzeug
- 1050, 1050': optischer Sensor
- 1055: Steuerungseinheit
- 1060: Ausgabeeinheit
- 1065: zu bearbeitende Fläche
- 1070: Bildverarbeitungseinheit
- 1075: Analysebereich
- 2000: Vorfeldbild
- 2005: segmentierte Fläche
- 3000: Analysebild
- 3005: Anomalie
- 3010: Anomaliestruktur
- 4000A-G: Teilungslinien
- 5000: Verfahren

- L1-L3: linke Bildsektoren
- R1-R3: rechte Bildsektoren
- F: Fahrtrichtung

## Patentansprüche

1. Verfahren (5000) zum Einstellen einer landwirtschaftlichen Arbeitsmaschine (1000), wobei die landwirtschaftliche Arbeitsmaschine (1000) ein optisches Sensorsystem (1050, 1050') und ein Vorsatzgerät (1010) zum Bearbeiten einer landwirtschaftlichen Fläche umfasst, wobei sich in einer Fahrtrichtung hinter dem Vorsatzgerät (1010) ein Analysebereich (1075) erstreckt,
das Verfahren (5000) umfassend:
Erfassen zumindest eines Vorfeldbildes (2000) einer zu bearbeitenden Fläche (1065) mittels des optischen Sensorsystems (1050, 1050'),
Erfassen zumindest eines Analysebildes (3000) des Analysebereichs (1075) mittels des optischen Sensorsystems (1050, 1050'),
Detektieren einer Anomalie (3005), indem eine Anomaliestruktur (3010) in dem zumindest einen Analysebild (3000) segmentiert und die segmentierte Anomaliestruktur (3010) basierend auf einer aus dem Vorfeldbild (2000) bestimmten Information einer Anomalie (3005) zugeordnet wird, und
Einstellen der landwirtschaftlichen Arbeitsmaschine (1000) basierend auf der Anomaliestruktur (3010), so dass die detektierte Anomalie (3005) zumindest teilweise verringert wird.

2. Verfahren (5000) nach Anspruch 1,
wobei das Detektieren der Anomalie (3005) umfasst:
Unterteilen des zumindest einen Analysebildes (3000) in Bildsektoren mittels Teilungslinien, wobei die Teilungslinien (4000A-G) im Wesentlichen parallel zu einer Fahrtrichtung (F) der landwirtschaftlichen Arbeitsmaschine (1000) ausgerichtet sind, und
Zuordnen der Anomaliestruktur (3010) zu einem der Bildsektoren (L1-L3, R1-R3).

3. Verfahren (5000) nach Anspruch 2,
wobei die Anomaliestruktur (3010) einem Bildsektor zugeordnet wird, wenn sich die Anomaliestruktur (3010) zumindest teilweise für ein vordefinierte Zeit in dem Bildsektor (L1-L3, R1-R3) befindet.

4. Verfahren (5000) nach einem der vorhergehenden Ansprüche,
wobei die segmentierte Anomaliestruktur (3010) basierend auf einer aus dem Vorfeldbild (2000) bestimmten Information einer Anomalie (3005) zugeordnet wird, indem pixelbasierte Ähnlichkeiten zwischen der segmentierten Anomaliestruktur (3010) und dem Vorfeldbild mittels Bildvergleichsalgorithmus identifiziert und quantifiziert werden;
ein zeitlicher Differenzwert bestimmt wird, wobei der zeitliche Differenzwert die zeitliche Verschiebung zwischen der segmentierten Anomaliestruktur (3010) und dem Vorfeldbild quantifiziert; und
die Anomalie (3005) basierend auf den pixelbasierten Ähnlichkeiten und dem zeitlichen Differenzwert ermittelt wird.

5. Verfahren (5000) nach einem der vorhergehenden Ansprüche,
umfassend:
Ermitteln der Position der detektierten Anomalie (3005), und
Bestimmen, ob die Position der detektierten Anomalie (3005) innerhalb einer durch das Vorsatzgerät (1010) bearbeiteten landwirtschaftlichen Fläche liegt.

6. Verfahren (5000) nach einem der vorhergehenden Ansprüche,
umfassend:
Übermitteln einer Information über die detektierte Anomalie (3005) an einen Bediener der landwirtschaftlichen Arbeitsmaschine (1000).

7. Verfahren (5000) nach einem der vorhergehenden Ansprüche,
umfassend:
Erfassen einer Vielzahl von Bildern (3000) des Analysebereichs (1075) mittels des optischen Sensorsystems (1050, 1050'), und
Detektieren der Anomalie (3005) des Vorsatzgeräts (1010), indem Anomaliestrukturen (3010) in der Vielzahl von Analysebildern (3000) segmentiert werden, ein Qualität-Score basierend auf den segmentierten Anomaliestrukturen (3010) ermittelt wird und der Qualität-Score einen vordefinierten Schwellwert erreicht.

8. Verfahren (5000) nach einem der vorhergehenden Ansprüche,
umfassend:
Einstellen der landwirtschaftlichen Arbeitsmaschine (1000), indem eine Arbeitshöhe, eine Auslenkung um eine Kippachse und/oder eine Auslenkung um eine Schwenkachse des Vorsatzgerätes (1010) verändert wird.

9. Landwirtschaftliche Arbeitsmaschine (1000) mit einem Vorsatzgerät (1010) zum Bearbeiten einer landwirtschaftlichen Fläche und einem optischen Sensorsystem (1050, 1050'), wobei das optische Sensorsystem (1050, 1050') eingerichtet ist, zumindest ein Vorfeldbild (4000) einer bearbeiteten Fläche (1065) und zumindest ein Analysebild (4000) eines Analysebereichs (1075) zu erfassen, wobei sich der Analysebereich (A) in einer Fahrtrichtung hinter dem Vorsatzgerät (1010) erstreckt,
wobei die landwirtschaftliche Arbeitsmaschine (1000) eine Steuerungseinheit (1055) aufweist, wobei die Steuerungseinheit (1055) eingerichtet ist,
eine Anomalie (3005) des Vorsatzgeräts (1010) zu detektieren, indem eine Anomaliestruktur (3010) in dem zumindest einen Analysebild (3000) segmentiert und die segmentierte Anomaliestruktur (3010) basierend auf einer aus dem Vorfeldbild (2000) bestimmten Information einer Anomalie (3005) zugeordnet wird, und
die landwirtschaftliche Arbeitsmaschine (1000) basierend auf der Anomaliestruktur (3010) einzustellen, so dass die detektierte Anomalie (3005) zumindest teilweise verringert wird.

10. Landwirtschaftliche Arbeitsmaschine (1000) nach Anspruch 9,
wobei das optische Sensorsystem (1050, 1050') an einem in Fahrtrichtung (F) vorderen Teil der landwirtschaftlichen Arbeitsmaschine (1000) angeordnet ist und
wobei das optische Sensorsystem (1050, 1050') einen ersten Sensor (1050), der auf den Analysebereich (1075) ausgerichtet ist, und einen zweiten Sensor (1050'), der auf die zu bearbeitende Fläche (1065) ausgerichtet ist, aufweisen.

11. Landwirtschaftliche Arbeitsmaschine (1000) nach Anspruch 9 oder 10,
wobei die landwirtschaftliche Arbeitsmaschine (1000) eine Ausgabeeinheit (1060) aufweist und wobei die Steuerungseinheit (1055) eingerichtet ist, Information über die detektierte Anomalie (3005) an die Ausgabeeinheit (1060) zu übermitteln.

12. Landwirtschaftliche Arbeitsmaschine (1000) nach einem der Ansprüche 9 bis 11,
wobei die Steuerungseinheit (1055) eingerichtet ist, eine Arbeitshöhe, eine Auslenkung um eine Kippachse und/oder eine Auslenkung um eine Schwenkachse des Vorsatzgerätes (1010) zu verändern.
